Europäisches Patentamt

European Patent Office

Office européen des brevets

(19)

(11) **EP 1 396 626 A2**

(12) **EUROPÄISCHE PATENTANMELDUNG**

(43) Veröffentlichungstag:
**10.03.2004 Patentblatt 2004/11**

(51) Int Cl.7: **F02D 41/24**, F02D 41/40,
F02M 65/00

(21) Anmeldenummer: **03015223.5**

(22) Anmeldetag: **04.07.2003**

(84) Benannte Vertragsstaaten:
**AT BE BG CH CY CZ DE DK EE ES FI FR GB GR HU IE IT LI LU MC NL PT RO SE SI SK TR**
Benannte Erstreckungsstaaten:
**AL LT LV MK**

(30) Priorität: **04.09.2002 DE 10240837**

(71) Anmelder: **ROBERT BOSCH GMBH**
**70442 Stuttgart (DE)**

(72) Erfinder:
- **Busch, Roger**
  **73728 Esslingen (DE)**
- **Kunz, Torsten**
  **76337 Waldbronn (DE)**

(54) **Anordnung und Verfahren zur Steuerung des Einspritzverhaltens eines Injektors**

(57) Bei einer Anordnung zur Steuerung des Einspritzverhaltens eines Injektors mit einer Einrichtung (26) zum Speichern von Informationen über den Injektor (20) und Mitteln (24) zur Steuerung des Injektors (20) auf Grundlage der gespeicherten Informationen umfassen erfindungsgemäß die gespeicherten Informationen den injektorspezifischen Einspritzbeginn. Die Erfindung betrifft weiter ein Verfahren zur Steuerung des Einspritzverhaltens eines Injektors sowie ein Verfahren zur Einordnung eines elektrisch angesteuerten Injektors zum Einspritzen eines Fluids nach seinem Einspritzverhalten.

Fig.1

EP 1 396 626 A2

**Beschreibung**

Die Erfindung betrifft eine Anordnung zur Steuerung des Einspritzverhaltens eines Injektors, mit einer Einrichtung zum Speichern von Informationen über den Injektor und Mitteln zur Steuerung des Injektors auf Grundlage der gespeicherten Informationen. Die Erfindung betrifft weiter ein Verfahren zur Steuerung des Einspritzverhaltens eines Injektors mit den Verfahrensschritten: Auslesen von gespeicherten Informationen über den Injektor und Steuern des Injektors auf Grundlage der ausgelesenen Informationen. Die Erfindung betrifft darüber hinaus ein Verfahren zur Einordnung eines elektrisch angesteuerten Injektors zum Einspritzen eines Fluids nach seinem Einspritzverhalten.

**Stand der Technik**

Elektrisch angesteuerte Einspritzdüsen (Injektoren) kommen beispielsweise bei hubgesteuerten Speichereinspritzsystemen ("Common-Rail") zum Einsatz. Bei einem derartigen Speichereinspritzsystem sind Druckerzeugung und Einspritzung voneinander entkoppelt. Der Einspritzdruck wird unabhängig von der Motordrehzahl und der Einspritzmenge erzeugt und steht im so genannten Rail, dem Kraftstoffspeicher, für die Einspritzung bereit. Der Einspritzzeitpunkt und die Einspritzmenge werden von einem elektronischen Steuergerät bestimmt und von der Einspritzdüse (Injektor) an jedem Motorzylinder über ein angesteuertes Steuerventil, beispielsweise ein Magnetventil oder einen Piezoaktor, umgesetzt.

Der elektrisch angesteuerte Injektor ersetzt die Düsenhalterkombination (Düse und Düsenhalter) herkömmlicher Dieseleinspritzanlagen. Aufgrund von mechanischen Fertigungstoleranzen besitzen derartige Injektoren unterschiedliche Mengenkennfelder und unterschiedliche Zeitpunkte für den Spritzbeginn. Dabei gibt ein Mengenkennfeld die Beziehung zwischen der Einspritzmenge, dem Raildruck und der Ansteuerzeit an. Als Folge füllt jeder Injektor trotz gleicher Ansteuerung durch das Steuergerät den Verbrennungsraum mit einer unterschiedlichen Kraftstoffmenge.

Um einen geringen Kraftstoffverbrauch bei gleichzeitiger Einhaltung immer schärferer Abgasnormen zu erreichen, dürfen die Injektoren im Betrieb nur geringe Abweichungen aufweisen. Neben der vom Kostengesichtspunkt her wenig befriedigenden Möglichkeit, die Injektionen zur Einhaltung der geforderten Spezifikation mechanisch nachzuarbeiten, besteht die Möglichkeit, die Injektoren nach der Fertigung bei einem bestimmten charakteristischen Arbeitspunkt im Hinblick auf ihre Einspritzmenge zu vermessen und in Klassen einzuteilen. Die jeweilige Klasseneinteilung wird dem Steuergerät für den Betrieb des Motors bekannt gemacht, so dass das Steuergerät die Steuerung an die spezifischen Merkmale der Injektoren einer bestimmten Klasse anpassen kann. Somit kann auch bei Bestehen von Fertigungstoleranzen eine definierte Einspritzmenge für jeden Injektor erreicht werden.

Es ist bekannt, die Klassifizierung der Injektoren so durchzuführen, dass die Injektoren an mehreren Prüfpunkten bezüglich der Einspritzmengenzumessung geprüft werden. Liegen die gemessenen Ist-Werte an allen Prüfpunkten innerhalb eines bestimmten Toleranzfensters, wird der Injektor als gut bewertet und auf Grundlage der Abweichung des Ist-Wertes vom Soll-Wert in eine von drei Toleranzklassen eingeteilt. Die Klassenzugehörigkeit wird nach dem Verbauen der Injektoren in einen Motor in das Motor-Steuergerät einprogrammiert. Für die mittlere Klasse führt das Steuergerät keine Korrektur durch, die Einspritzmenge der oberen und unteren Klasse wird nach einem vorgegebenen Kennfeld korrigiert. Die Korrektur ist allerdings nur für den der Klasseneinteilung zugrunde liegenden Prüfpunkt exakt, für andere Arbeitspunkte des Motors ist die Korrektur aufgrund einer niedrigen Korrelation des Einspritzverhaltens an verschiedenen Arbeitspunkten oft nicht zufriedenstellend. Dies trifft insbesondere im Hinblick auf die Erfüllung zukünftiger Emissionsgrenzwertnormen zu.

Darüber hinaus befinden sich moderne Hochleistüngsdieselmotoren bei Volllast nahe an der Höchstdruckbegrenzung, was eine möglichst exakte Steuerung der betroffenen Komponenten erfordert.

**Vorteile der Erfindung**

Die erfindungsgemäße Vorrichtung gemäß Anspruch 1 baut auf dem Stand der Technik dadurch auf, dass die gespeicherten Informationen den injektorspezifischen Einspritzbeginn umfassen. Im Gegensatz dazu findet bei Anordnungen nach dem Stand der Technik eine messtechnische Erfassung und Berücksichtigung des Spritzbeginns beim Betrieb eines Motors nicht statt. Vielmehr wird herkömmlich der Spritzbeginn über den Öffnungsdruck der Einspritzdüse in engen Toleranzen eingestellt. Die erfindungsgemäße Lösung erlaubt demgegenüber aufgrund der Kenntnis des injektorspezifischen Spritzbeginns durch Variation der Ansteuerung am Motor gegebenenfalls zielführende Korrekturen vorzunehmen. Darüber hinaus können die Anforderungen an die Fertigungstoleranzen abgesenkt und damit die Produktionskosten verringert werden.

Durch die Maßnahme des Anspruchs 2 ist der Vorteil geschaffen, dass durch die Integration der injektorspezifischen Steuerung in das Motor-Steuergerät ein einziges Steuergerät die gesamte Injektorsteuerung übernehmen kann.

Mit der Maßnahme des Anspruchs 3 kann eine besonders zuverlässige Steuerung der Einspritzmenge erreicht werden.

Die Maßnahmen des Anspruchs 4 bieten den Vorteil, dass in einem Datenspeicher in einfacher Art und Weise eine große Anzahl von Daten abgelegt werden kann, dass die gespeicherten Informationen automatisch aus einem Datenspeicher oder einem Widerstandssystem ausgelesen werden können, dass ein Barcode eingescannt werden kann, um die Information dem Steuergerät zur Verfügung zu stellen, oder dass eine alphanumerische Beschriftung manuell eingegeben oder über eine Kamera eingelesen werden kann. In allen Fällen kann somit eine automatische Programmierung des Steuergeräts erfolgen.

In diesem Zusammenhang bietet die Maßnahme des Anspruchs 5 den Vorteil, dass die Ansteuerung am Motor zielgerichtet auf den injektorspezifischen Einspritzbeginn abgestellt werden kann, um so eine große Laufruhe, niedrigen Kraftstoffverbrauch und niedrige Emissionswerte zu erzielen.

Die Erfindung baut gemäß Anspruch 6 auf dem gattungsgemäßen Verfahren dadurch auf, dass die gespeicherten Informationen den injektorspezifischen Einspritzbeginn umfassen und dass die Steuerung unter Berücksichtigung des injektorspezifischen Einspritzbeginns durchgeführt wird. Das erfindungsgemäße Verfahren erlaubt somit eine exakte Motorsteuerung, die über eine Steuerung auf Grundlage lediglich des injektorspezifischen Einspritzmengenkennfelds hinausgeht.

Durch die Maßnahme des Anspruchs 7 können zusätzlich Korrekturen auf Basis der Beziehung zwischen Einspritzmenge, Raildruck und Ansteuerzeit verwendet werden, wodurch Toleranzen durch die injektorspezifische Steuerung besonders gut ausgeglichen werden können.

In diesem Zusammenhang erlaubt die Maßnahme des Anspruchs 8 weitere Motorfunktionen in die Steuerung einzubeziehen um zu besonders großer Laufruhe, niedrigem Kraftstoffverbrauch und niedrigen Emissionswerten zu gelangen.

Das erfindungsgemäße Verfahren nach Anspruch 9 baut auf dem Stand der Technik dadurch auf, dass der Beginn der Bestromung des Injektors bestimmt wird, die eingespritzte Fluidmenge als Funktion der Zeit bestimmt wird, der Einspitzbeginn auf die Zeitdifferenz zwischen einem ersten Anstieg der eingespritzten Fluidmenge und dem Bestromungsbeginn festgesetzt wird, und der Injektor auf Grundlage des festgesetzten Einspritzbeginns eingeordnet wird.

Dabei kann die Einordnung dadurch erfolgen, dass der Injektor einer von einer Mehrzahl von Klassen zugeordnet wird, die jeweils einen Einspritzbeginn in einem bestimmten Fensterbereich angeben. Die Einordnung kann aber auch durch die direkte Anlage des Spritzbeginns, etwa in einer dem Injektor zugeordneten Speichereinrichtung, oder durch Aufdrucken einer geeignet kodierten Beschriftung auf dem Injektor erfolgen.

Die Maßnahme des Anspruchs 10 schafft den Vorteil, dass das differenzierte Fluidmengensignal die Bestimmung des Einsatzzeitpunkts der Einspritzung mit hoher Genauigkeit erlaubt.

## Zeichnungen

Die Erfindung wird nachfolgend anhand der zugehörigen Zeichnungen noch näher erläutert.

Es zeigen:

Figur 1    eine schematische Darstellung eines Teils eines Speichereinspritzsystems mit einer Anordnung nach einem Ausführungsbeispiel der Erfindung;

Figur 2    zur Illustration der Ermittlung des Spritzbeginns in (a) das Bestromungssignal eines Injektors, in (b) ein Diagramm der gemessenen Einspritzmenge des Injektors als Funktion der Zeit und in (c) eine Messkurve der nach der Zeit differenzierten Einspritzmenge des Injektors; und

Figur 3    eine Darstellung der Korrelation des nach dem erfindungsgemäßen Verfahren bestimmten Spritzbeginns, aufgetragen auf der Ordinate und des in einer Photokammer bestimmten Spritzbeginns, aufgetragen auf der Abszisse.

## Beschreibung der Ausführungsbeispiele

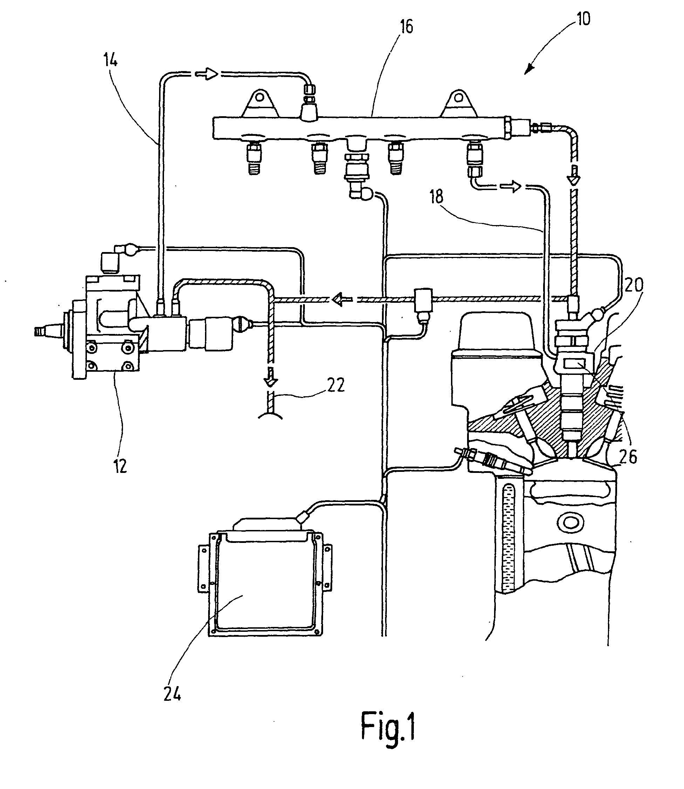

Die schematische Darstellung der Figur 1 zeigt den Hochdruckteil eines allgemein mit 10 bezeichneten Speichereinspritzsystems (Common-Rail) mit einer Anordnung nach einem Ausführungsbeispiel der Erfindung. Im Folgenden werden nur die Hauptkomponenten und solche Komponenten näher beschrieben, die für das Verständnis der vorliegenden Erfindung wesentlich sind.

In dem gezeigten Hochdruckteil ist eine Hochdruckpumpe 12 über eine Hochdruck-Kraftstoffleitung 14 mit dem Hochdruckspeicher 16, dem "Rail", verbunden. Der Hochdruckspeicher 16 ist seinerseits über weitere Hochdruck-Kraftstoffleitungen 18 mit den elektrisch ansteuerbaren Einspritzdüsen (Injektoren) 20 verbunden. In der vereinfachten Darstellung der Figur 1 sind lediglich eine Hochdruck-Kraftstoffleitung 18 und ein Injektor 20 gezeigt. Eine Kraftstoffrückleitung 22 führt zurück in den im Niederdruckteil gelegenen Kraftstoffbehälter (nicht gezeigt). Ein Motor-Steuergerät 24 steuert neben Stellern für Motorfunktionen und weiteren Hilfsfunktionen insbesondere die elektrisch ansteuerbaren Injektoren 20. Jeder Injektor 20 weist eine Zulaufdrossel auf, über die Kraftstoff von der Hochdruck-Kraftstoffleitung 18 in einen Ventilsteuerraum geführt werden kann. Der Ventilsteuerraum ist über eine Ablaufdrossel, die durch ein Magnetventil geöffnet werden kann, mit der Kraftstoffrückleitung 22 verbunden.

Im geschlossenen Zustand der Ablaufdrossel überwiegt die hydraulische Kraft auf den Ventilsteuerkolben gegenüber der Kraft auf die Druckstufe der Düsennadel. Infolgedessen wird die Düsennadel in ihren Sitz gepresst und schließt den Hockdruckkanal dicht zum Motorraum ab. Durch eine elektrische Ansteuerung des Magnetventils wird die Ablaufdrossel geöffnet, und der Druck im ventilsteuerraum und damit auch die hydraulische Kraft auf den Ventilsteuerkolben sinkt. Sobald die hydraulische Kraft jene auf die Druckstufe der Düsennadel unterschreitet, öffnet die Düsennadel, so dass der Kraftstoff durch die Spritzlöcher in den Verbrennungsraum gelangen kann. Das Ende der Einspritzung ist durch die Wegnahme der Bestromung des Magnetventils gegeben.

Jeder Injektor 20 enthält weiter eine Speichereinrichtung 26, die Informationen über das Einspritzverhalten des konkreten Injektors enthält. Diese Informationen können von dem Motor-Steuergerät 24 ausgelesen und bei der Steuerung von Motorfunktionen, insbesondere bei der individuellen Ansteuerung der Injektoren 20 verwendet werden. Dabei umfassen die in der Speichereinrichtung 26 abgelegten Informationen nach der Erfindung zumindest eine Angabe über den injektorspezifischen Spritzbeginn, in der Regel aber weitere Angaben über das Mengenkennfeld des Injektors 20.

Die Speichereinrichtung 26 ist im Ausführungsbeispiel ohne Beschränkung der Allgemeinheit der Erfindung als ein an dem Injektor angebrachter integrierter Schaltkreis ausgeführt. Sie kann ebenso durch an dem Injektor angeordnete Widerstände, durch einen an dem Injektor angebrachten Barcode, oder durch eine alphanumerische Verschlüsselung auf einem Beschriftungsfeld des Injektors realisiert sein. Das Motor-Steuergerät 24 enthält im Ausführungsbeispiel ebenfalls einen integrierten Halbleiterschaltkreis zum Auslesen und Auswerten der in der Speichereinrichtung 26 enthaltenen Informationen.

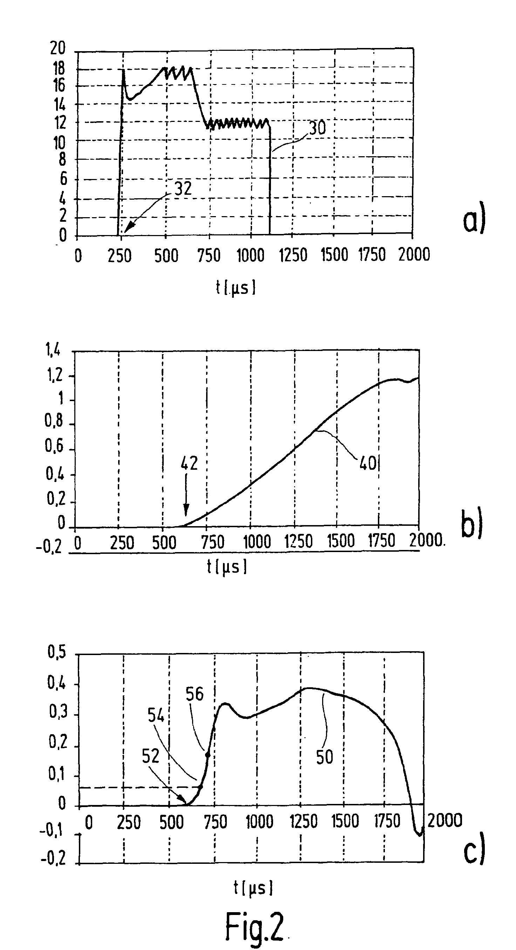

Der Spritzbeginn der Injektoren 20 wird vor ihrem Verbau in den Motor aus dem Ausgangssignal eines Einspritzmengenindikators bestimmt, wie in Zusammenhang mit Figur 2 näher erläutert. Ein Einspritzmengenindikator wird in der Komponentenbewertung und Komponentenprüfung eingesetzt, um aus dem Kolbenhubsignal auf die Einspritzmenge zu schließen.

Figur 2 zeigt in (a) das Bestromungssignal eines Injektors, in (b) ein Diagramm der gemessenen Einspritzmenge des Injektors und in (c) eine Messkurve der differenzierten Einspritzmenge, jeweils als Funktion der Zeit. Als Spritzbeginn des Injektors wird die Zeitdifferenz zwischen dem ersten Anstieg der eingespritzten Kraftstoffmenge und dem Bestromungsbeginn festgesetzt. Die Kurve 30 in Figur 2(a) zeigt das.Stromzangensignal. Der Pfeil 32 gibt den Beginn der Bestromung $t_0$ an. Im Ausführungsbeispiel ist $t_0$ etwa gleich 240 µs.

In Figur 2(b) ist als Kurve 40 das Kolbenhubsignal des Einspritzmengenindikators dargestellt. Der Pfeil 42 gibt den Zeitpunkt des ersten Anstiegs der eingespritzten Kraftstoffmenge $t_1$ an, der im Ausführungsbeispiel etwa bei 630 µs liegt. Der Einspritzbeginn wird dann nach der Erfindung für diesen Injektor auf

$$t_{EMI} = t_1 - t_0$$

festgesetzt, im Ausführungsbeispiel also auf etwa 390 µs.

Eine weitere Möglichkeit, den Spritzbeginn des Injektors zu bestimmen, ist im Zusammenhang mit der Figur 2(c) erläutert. Dort ist das differenzierte Kolbenhubsignal des Einspritzmengenindikators als Kurve 50 dargestellt, welches ebenfalls am Ausgang des Einspritzmengenindikators abgegriffen werden kann. Wie aus der Figur 2(c) ersichtlich, zeigt das differenzierte Kolbenhubsignal zu Beginn der Einspritzung einen steilen, schmalen Anstieg, bevor sich ein etwa konstanter Wert einstellt, der der etwa konstanten Steigung des Kolbenhubsignals von Figur 2(b) entspricht. Aus diesem steilen Anstieg kann der Einsatzzeitpunkt $t_2$ der Einspritzung aus der Kurve 50 mit hoher Genauigkeit extrahiert werden.

Für die Festlegung des gemessenen Zeitpunkts des Anstiegs können verschiedene Kriterien verwendet werden. Es kann etwa auf das Knie des differenzierten Signals abgestellt werden (Bezugszeichen 52), oder auf den Zeitpunkt, zu dem ein vorbestimmter Schwellwert, im Ausführungsbeispiel 0,05, überschritten wird (Bezugszeichen 54). Weiter kann auf den Zeitpunkt abgestellt werden, an dem das differenzierte Signal 50 % seines Maximalwerts erreicht (Bezugszeichen 56). Unabhängig davon, welches Kriterium gewählt wird, wird der Einspritzbeginn nach der Erfindung auf

$$t_{diff} = t_2 - t_0$$

festgesetzt. Es versteht sich, dass für gemeinsam verbaute Injektoren dasselbe Kriterium zur Bestimmung des Spritzbeginns verwendet werden sollte.

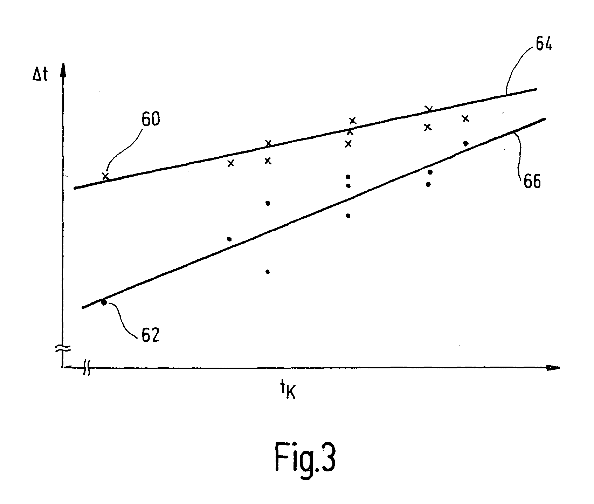

Zur Überprüfung des mit der geschilderten Methode bestimmten Spritzbeginns wurde in einem Vergleichsexperiment der Spritzbeginn $t_K$ von 10 Injektoren optisch in einer Photokammer bestimmt. Zugleich wurde der Spritzbeginn, wie oben dargestellt, aus dem Kolbenhubsignal des Einspritzmengenindikators und dem differenzierten Kolbenhubsignal ermittelt. Figur 3 zeigt eine Darstellung der Korrelation der nach dem erfindungsgemäßen Verfahren bestimmten Spritzbeginne und des in der Photokammer bestimmten Spritzbeginns. Dabei ist der in einer Photokammer bestimmte Spritzbeginn auf der Abszisse, die nach der Erfindung bestimmten Spritzbeginne auf der Ordinate aufgetragen. Die Punkte 62 zeigen den entsprechend Figur 2(b) aus dem Kolbenhubsignal des Einspritzmengenindikators bestimmten Spritzbeginn $t_{EMI}$ an, die Kreuze 60 den entsprechend Figur 2(c) aus dem differenzierten Kolbenhubsignal bestimmten Spritzbeginn $t_{diff}$.

Wie aus den beiden Ausgleichsgeraden 64 und 66 ersichtlich, ist der nach der Erfindung bestimmte Spritzbeginn für alle Injektoren mit den aus der Photokammer bestimmten Referenzwerten stark korreliert und somit für die Einordnung der Injektoren nach ihrem Spritzverhalten geeignet.

Die vorhergehende Beschreibung der Ausführungsbeispiele gemäß der vorliegenden Erfindung dient nur zu illustrativen Zwecken und nicht zum Zwecke der Beschränkung der Erfindung. Im Rahmen der Erfindung sind verschiedene Änderungen und Modifikationen möglich, ohne den Umfang der Erfindung sowie ihre Äquivalente zu verlassen.

**Patentansprüche**

1. Anordnung zur Steuerung des Einspritzverhaltens eines Injektors, mit

   - einer Einrichtung (26) zum Speichern von Informationen über den Injektor (20) und

   - Mitteln (24) zur Steuerung des Injektors (20) auf Grundlage der gespeicherten Informationen

   **dadurch gekennzeichnet,**

   - **dass** die gespeicherten Informationen den injektorspezifischen Einspritzbeginn umfassen.

2. Anordnung nach Anspruch 1, **dadurch gekennzeichnet, dass** die Mittel zur Steuerung des Injektors (20) in einem Motor-Steuergerät (24) integriert sind.

3. Anordnung nach Anspruch 1 oder 2, **dadurch gekennzeichnet, dass** die gespeicherten Informationen Korrekturwerte für das Mengenkennfeld des Injektors (20) umfassen.

4. Anordnung nach einem der vorhergehenden Ansprüche, **dadurch gekennzeichnet, dass** die Einrichtung (26) zum Speichern von Informationen durch

   - einen an dem Injektor (20) angebrachten Datenspeicher, insbesondere einen an dem Injektor (20) angebrachten integrierten Schaltkreis,

   - durch an dem Injektor (20) angeordnete Widerstände,

   - durch einen an dem Injektor (20) angeordneten Barcode, oder

   - durch eine alphanumerische Verschlüsselung auf einem Beschriftungsfeld des Injektors (20) realisiert ist.

5. Anordnung nach einem der vorhergehenden Ansprüche, **dadurch gekennzeichnet, dass** Mittel zur Steuerung weiterer Motorfunktionen auf Grundlage der Informationen über den injektorspezifischen Einspritzbeginn vorgesehen sind, bevorzugt, dass die Mittel zur Steuerung weiterer Motorfunktionen in dem Motor-Steuergerät (24) integriert sind.

6. Verfahren zur Steuerung des Einspritzverhaltens eines Injektors mit den Verfahrensschritten:

   - Auslesen von gespeicherten Informationen über den Injektor (20) und

   - Steuern des Injektors (20) auf Grundlage der ausgelesenen Informationen

   **dadurch gekennzeichnet,**

   - **dass** die gespeicherten Informationen den injektorspezifischen Einspritzbeginn umfassen und

   - **dass** die Steuerung unter Berücksichtigung des injektorspezifischen Einspritzbeginns durchgeführt wird.

7. Verfahren nach Anspruch 6, **dadurch gekennzeichnet, dass** die gespeicherten Informationen Korrekturwerte für das Mengenkennfeld des Injektors (20) umfassen.

8. Verfahren nach Anspruch 6 oder 7, **dadurch gekennzeichnet, dass** weitere Motorfunktionen auf Grundlage der Informationen über den Injektor (20), insbesondere über den injektorspezifischen Einspritzbeginn gesteuert werden.

9. Verfahren zur Einordnung eines elektrisch angesteuerten Injektors zum Einspritzen eines Fluids nach seinem Einspritzverhalten, mit den Verfahrensschritten:

   - Bestimmen des Beginns der Bestromung (30) des Injektors (20);

   - Bestimmen der eingespritzten Fluidmenge (40) als Funktion der Zeit;

   - Festsetzen des Einspitzbeginns auf die Zeitdifferenz zwischen einem ersten Anstieg (42; 52, 54, 56) der eingespritzten Fluidmenge und dem Bestromungsbeginn (32); und

   - Einordnen des Injektors (20) auf Grundlage des festgesetzten Einspritzbeginns.

10. Verfahren nach Anspruch 9, **dadurch gekennzeichnet, dass** die Fluidmengenfunktion (40) nach der Zeit abgeleitet wird, und dass der erste Anstieg der eingespritzten Fluidmenge aus dem Anstieg (52, 54, 56) der Ableitung (50) der Fluidmengenfunktion ermittelt wird.

Fig.1

Fig.2

Fig.3